# EUROPÄISCHE PATENTSCHRIFT

(11) **EP 2 378 008 B1**
(45) Veröffentlichungstag und Bekanntmachung des Hinweises auf die Patenterteilung: **29.04.2020**
(21) Anmeldenummer: 11002458.5
(22) Anmeldetag: 24.03.2011
(51) Int. Cl.: E02F 9/12, E02F 9/08, B62D 33/06, B62D 63/02, B62D 21/18

(54) **BAUMASCHINE ODER UMSCHLAGGERÄT**
CONSTRUCTION MACHINE OR WRAPPING DEVICE
ENGIN OU APPAREIL DE TRANSBORDEMENT

(30) Priorität: 16.04.2010 DE 102010015163
(43) Veröffentlichungstag der Anmeldung: 19.10.2011
(73) Patentinhaber: Liebherr-Hydraulikbagger GmbH, 88457 Kirchdorf/Iller (DE)
(72) Erfinder: Bolz, Gerhard, Dipl.-Ing. (TH), 88457 Kirchdorf/ Iller (DE); Eberhardt, Rolf, Dipl.-Ing. (FH), 89155 Erbach (DE); Schott, Stefan, Dipl.-Ing. (FH), 87700 Memmingen (DE)
(74) Vertreter: Laufhütte, Dieter

(56) Entgegenhaltungen:
- EP-A2- 0 745 528
- EP-A2- 1 647 635
- DE-A1- 4 219 803
- DE-B3-102004 028 437
- GB-A- 2 189 754
- JP-A- 2002 097 666
- US-A- 1 817 905

## Beschreibung

Die vorliegende Erfindung betrifft eine Vorrichtung, insbesondere eine als Mobilbagger ausgeführte Baumaschine oder ein als Mobilbagger ausgeführtes Umschlaggerät, mit einem ein Fahrgestell tragenden Unterwagen und einem daran angelenkten Oberwagen.

Insbesondere Baumaschinen unterscheiden sich in der Art des verwendeten Anbaugerätes sowie des verwendeten Fahrwerks. Bei gattungsgemäßen Baumaschinen trägt der Unterwagen das Fahrwerk, was beispielsweise als einfaches Radfahrwerk oder Kettenfahrwerk ausgeführt sein kann. Am Unterwagen ist wiederum der Oberwagen der Baumaschine vorzugsweise drehbar angelenkt. Der Oberwagen selbst besteht im wesentlichen aus einem starren Unterbau, auf dessen Oberseite zumindest ein Teil bzw. alle Komponenten der Baumaschine an vorbestimmten sowie auf festen Montageplätzen angeordnet sind. In der Regel erfolgt die Montage der einzelnen Komponenten auf dem Oberwagen während der Produktion im Werk des Herstellers. Die einzelnen Komponenten werden nacheinander auf dem Oberwagen montiert und miteinander betriebsfähig verschlaucht bzw. verbunden. Ein nachträglicher Austausch einzelner Komponenten ist oftmals prinzipbedingt nicht vorgesehen oder nur unter großem Aufwand möglich. Vielmehr verhält es sich so, daß zum Austausch einer Komponente zur Reparatur, die gesamte Baumaschine in eine dafür vorgesehene Montagehalle verfahren werden muß.

Auch ist der Oberwagen in der Regel derart ausgeführt, daß er sich nur zur Aufnahme der speziell dafür ausgelegten einzelnen Komponenten eignet. Ein Upgrade einzelner Maschinenkomponenten, z. B. die Montage eines Antriebsaggregats einer höheren Stufe, läßt sich meist ohne Anpassung des Unterbaus nicht vollziehen.

DE 42 19 803 A1 offenbart ein Baggergerät, das nach einem Baukastensystem aufgebaut ist, wobei eine Oberwageneinheit eine Komponente des Baukastensystems ist. Die Oberwageneinheit weist ein Motorgehäuse, eine Hydraulikversorgung und - steuerung, eine getrennt montierbare Kabine und vordere Lageransätze auf.

EP 0 745 528 A2 offenbart ein Baugerät, das einen ein Fahrgestell tragenden Unterwagen und ein darauf aufgesetzten Oberwagen aufweist. Der Oberwagen weist mehrere Module auf, die mit einem Haltegestell verbunden werden können. Insbesondere weist der Oberwagen eine Antriebseinheit auf, die ein Energiequellenmodul und ein Hydraulikmodul besitzt.

Unter Berücksichtigung der vorgenannten Problematik ist es Aufgabe der vorliegenden Erfindung, einen alternativen Konstruktionsansatz für den Oberwagen einer gattungsgemäßen Baumaschine bzw. eines Umschlaggerätes aufzuzeigen.

Diese Aufgabe wird durch eine Vorrichtung mit den Merkmalen des Anspruchs 1 gelöst. Demnach ist eine Vorrichtung, insbesondere eine als Mobilbagger ausgeführte Baumaschine bzw. ein entsprechend aufgebautes Umschlaggerät, mit einem ein Fahrgestell tragenden Unterwagen und einem daran angelenkten Oberwagen vorgesehen. Der Oberwagen der Vorrichtung weist erfindungsgemäß nicht einen einzigen starren Unterbau auf, sondern ist statt dessen modulartig aus mindestens zwei Modulen aufgebaut, die miteinander lösbar zur vollständigen Montage des Oberwagens koppelbar sind. Von den mindestens zwei Modulen ist mindestens eines als Antriebsmodul ausgeführt, das eine funktionsfähige Einheit aus Maschinenantrieb sowie Maschinenkühlsystem bildet. Weiterhin ist mindestens ein weiteres Modul vorgesehen, das zumindest eine oder alle weiteren Komponenten des Oberwagens umfaßt. Der Oberwagen der Baumaschine ist folglich aus mindestens zwei Modulen aufgebaut, die in bekannter Art und Weise mit dem Unterwagen der Baumaschine mittelbar oder unmittelbar verbunden sind.

Ein besonderer Vorteil der vorliegenden Erfindung ergibt sich dadurch, daß die einzelnen Module des Oberwagens unabhängig voneinander geändert bzw. angepaßt werden können. Lediglich der Kopplungsmechanismus sollte aus Kompatibilitätsgründen nach einem vordefinierten Standard ausgeführt sein. Damit besteht die Möglichkeit, bereits in der Produktionsphase der Baumaschinen verschiedenartige Antriebsmodule herzustellen, die sich hinsichtlich ihrer Leistungsdaten voneinander unterscheiden. Demnach ist die Baumaschine sehr einfach, gegebenenfalls auch nachträglich, an die gewünschten Anforderungen des Erwerbers anpaßbar, da die einzelnen Antriebsmodulversionen wahlweise nach dem Baukastenprinzip mit den übrigen Modulen der Baumaschine koppelbar sind und der Oberwagen gemäß den Vorgaben individuell gestaltbar ist. Gleiches gilt selbstverständlich für alle weiteren erforderlichen Module, die ebenfalls in unterschiedlichen Versionen ausführbar sind.

Ein weiterer wesentlicher Vorteil der vorliegenden Erfindung ist es, daß das Antriebsmodul als funktionsfähige Einheit ausgeführt ist. Dies setzt voraus, daß neben dem oder den erforderlichen Antriebsaggregaten auch das notwendige Kühlsystem der Maschine bereits im Antriebsmodul integriert ist und vorab mit dem Aggregat betriebsbereit verschlaucht bzw. verkabelt ist. Das gebildete Modul ist bereits vor der Endmontage am Oberwagen funktionsfähig und läßt sich vor der Endmontage ausführlich auf seine ordnungsgemäße Funktionsfähigkeit überprüfen und testen, was zu erheblichen Produktions- und Qualitätsvorteilen führt.

Weiterhin bietet die vorliegende Erfindung die Möglichkeit, daß im Bedarfsfall eine schnelle Reparatur der Baumaschine vor Ort erfolgen kann. Die einzelnen Module lassen sich unkompliziert vom Oberwagen demontieren und gegen funktionsfähige Module austauschen.

Vorteilhafterweise umfaßt das Antriebsmodul wenigstens einen Verbrennungsmotor und/oder ein Antriebsaggregat für eine Hydraulikvorrichtung. Der Verbrennungsmotor dient zum Antrieb des Fahrgestells am Unterwagen und gegebenenfalls zur Energieversorgung eines Antriebsaggregats für eine Hydraulikvorrichtung. Das Antriebsaggregat der Hydraulikvorrichtung umfaßt vorzugsweise eine Hydraulikpumpe, die Bestandteil des Hydraulikkreislaufs zum Antrieb des montierten Anbaugerätes am Oberwagen ist. Selbstverständlich lassen sich auch mehrere Verbrennungsmotoren oder auch Elektromotoren im Modul unterbringen, die eine getrennte und gleichzeitig unabhängige Energieversorgung der diversen Antriebsstränge erlauben.

In einer vorteilhaften Ausführung umfaßt das Antriebsmodul einen Rahmen oder ein Gestell, daß zur Aufnahme des oder der Antriebsaggregate sowie des Kühlsystems dient. Der Rahmen kann ein oder mehrteilig ausgeführt sein. Bevorzugt sind separate Rahmenteile für die Aufnahme der einzelnen Modulkomponenten vorgesehen, die zur Herstellung des Antriebsmoduls miteinander verbindbar sind.

Ferner kann es vorgesehen sein, daß ein Modul einen Hydrauliktank und/oder einen Kraftstofftank umfaßt.

Weiterhin kann es vorgesehen sein, daß ein Modul eine Steuereinheit, insbesondere eine Hydrauliksteuerung umfaßt. Die Steuereinheit ist vorzugsweise für die Motoransteuerung sowie für übliche Maschinenfunktionen verantwortlich. Mit Hilfe der Hydrauliksteuerung läßt sich das Hydraulikaggregat im Antriebsmodul steuern und ein vorgesehenes Anbaugerät am Oberwagen entsprechend bedienen.

Ferner kann es vorgesehen sein, daß ein Modul die Führerkabine/Fahrerkabine umfaßt. Grundsätzlich kann wenigstens eine Steuereinheit und/oder die Hydrauliksteuerung bereits in der Führerkabine integriert sein oder als eigenständiges Modul ausgeführt sein.

In einer besonders bevorzugten Ausgestaltung der Erfindung kann es vorgesehen sein, daß alle oder zumindest ein wesentlicher Teil der erforderlichen Hydraulikventile des Hydraulikkreislaufs in einem separaten Modul zusammengefaßt sind. Die Ventilanordnung ist für den komplexen Regelungsprozeß innerhalb des Hydrauliksystems zuständig und ist bereits vorab bei Herstellung des Moduls miteinander verschaltet bzw. verschlaucht. Somit läßt sich ein wesentlicher Teil des Hydraulickreislaufs bereits vor der Endmontage ausgiebig testen. Erst mit der Endmontage des Oberwagens wird der Hydraulikkreislauf durch Anschluß des Moduls an den Tank und die Hydrauliksteuerung vervollständigt. Alle weiteren Bestandteile des Hydraulikkreislaufs können ebenfalls bereits vor der Endmontage getestet werden.

In einer weiteren vorteilhaften Ausführung der erfindungsgemäßen Vorrichtung ist wenigstens ein Modul vorgesehen, das das Grundgestell des Oberwagens bildet. Vorzugsweise stellt das Grundgestell das zentrale Bestandteil des Oberwagens dar, an dem alle oder zumindest ein wesentlicher Teil der weiteren Module mittelbar oder unmittelbar lösbar ankoppelbar sind. Denkbar ist es, daß einzelne Module seitlich durch Verbindungsmittel am Grundgestell ankoppelbar sind. Ebenso läßt sich ein Modul auf der Oberseite des Grundgestells ankoppeln.

Vorteilhafterweise sieht das Grundgestell Verbindungsmittel zur bevorzugt lösbaren Verbindung des Oberwagens mit dem Unterwagen vor. Um den Oberwagen drehbar auszuführen, kann dieses Verbindungsmittel ein entsprechendes Drehgelenk umfassen.

Da das vorgenannte Grundgestell in der Regel eine stabile Stahlkonstruktion darstellt, ist es zweckmäßig, im gebildeten Hohlraum des Grundgestells wenigstens einen Hydrauliktank und/oder wenigstens einen Kraftstofftank anzuordnen. Die Tanks werden durch die Stahlkonstruktion vor Beschädigungen geschützt, wodurch die Betriebssicherheit der Baumaschine erhöht wird. Weiterhin entspricht dies einer besonders platzsparenden Anordnung.

Um den Kopplungsprozess zwischen den einzelnen Modulen möglichst einfach und wenig komplex zu gestalten, ist es von Vorteil, wenn alle oder ein Teil der Module Anschlussmittel zur Herstellung wenigstens einer Versorgungsleitung aufweisen. Die Anschlussmittel umfassen bevorzugt Kopplungsmittel für Hydraulikleitungen bzw. Kraftstoffleitungen oder sonstige Versorgungs- und Signalleitungen. Auch bei unterschiedlicher Ausführung der einzelnen Module sollten die entsprechenden Anschlussmittel kompatibel gehalten werden, so daß versionsunabhängig eine einfache Montage der Module am Oberwagen gewährleistet ist.

Die vorliegende Erfindung ist weiterhin auf ein Modul für einen modulartig aufgebauten Oberwagen einer Baumaschine oder eines Umschlaggerätes gemäß einem der vorangegangenen Merkmale gerichtet. Das erfindungsgemäße Modul ist als eigenständige funktionsfähige Einheit ausgeführt, die mindestens ein Maschinenantriebsaggregat sowie ein Maschinenkühlsystem umfaßt und die bereits vorab betriebsfähig verschlaucht und verkabelt ist.

Mögliche Ausführungen und Merkmale des erfindungsgemäßen Moduls entsprechen im wesentlichen den voranstehenden Ausführungen und Merkmalen der Baumaschine oder des Umschlaggerätes, weshalb an dieser Stelle auf eine wiederholte Erläuterung verzichtet wird.

Die modulartige Ausführung des Oberwagens der erfindungsgemäßen Vorrichtung vereinfacht den gesamten Montage- und Produktionsprozess und führt zu erheblichen Kosteneinsparungen. So bietet sich dem Baumaschinenhersteller beispielsweise die Möglichkeit, die einzelnen Module an getrennten Fertigungsorten herzustellen und diese eigenständig auf ihre Funktionalität umfangreich zu überprüfen. Erst zur Endmontage der Vorrichtung müssen die einzelnen Module am Endmontageort angeliefert werden. Ein derartiger dezentraler Produktionsprozess bietet nicht nur erhebliche Kostenvorteile, sondern führt auch zu einer maßgeblichen Qualitätssteigerung der hergestellten Endprodukte.

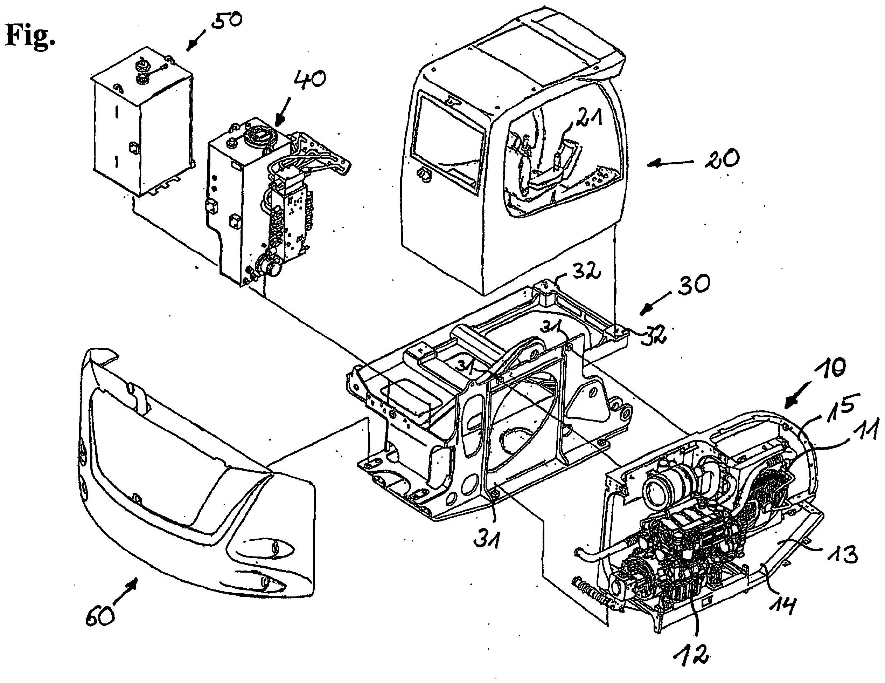

Weitere Merkmale und Vorteile der Erfindung sollen anhand des einzigen in der Figur dargestellten Ausführungsbeispiels näher erläutert werden.

Die einzige Figur zeigt eine Explosionsdarstellung des Oberwagens einer hier beispielhaft dargestellten erfindungsgemäßen Baumaschine. Als zentrales Element des Oberwagens dient das als Stahlkonstruktion ausgeführte Grundgestell 30. Auf der Unterseite der Stahlkonstruktion 30 befindet sich ein Drehgelenk zur drehbaren Befestigung des Oberwagens am Unterwagen der Baumaschine. Selbstverständlich läßt sich die Verbindung zwischen Ober- und Unterwagen auch starr ausführen.

Die Stahlkonstruktion 30 kann einteilig ausgeführt sein, jedoch ist die Erfindung nicht auf eine derartige Ausführungsform begrenzt. Die Konstruktion 30 läßt sich durch eine im wesentlichen quaderartige Körperform beschreiben, wobei die einzelnen Flächen zahlreiche Ausnehmungen und zusätzliche Verstärkungen wie Quer- oder Längsverstrebungen aufweisen.

Auf der in Fahrtrichtung rechts gelegenen Seitenwandung der Stahlkonstruktion 30 läßt sich das Antriebsmodul 10 über entsprechende Verbindungsmittel 31 lösbar ankoppeln. Das Antriebsmodul 10 umfaßt dabei einen Verbrennungsmotor 12, der von dem Kühlsystem 11 auf die zulässige Betriebstemperatur heruntergekühlt wird. Auch der zum Kühlsystem 11 gehörige Kühlerventilator wird integriert und vorzugsweise mit nach außen zeigender Ansaugrichtung ausgerichtet. Die einzelnen Komponenten des Antriebsmoduls 10 werden bereits weit vor der Endmontage der Baumaschinen in einem dafür vorgesehenen Rahmen 13 befestigt und miteinander verschlaucht und verschaltet, wodurch eine funktionsfähige selbstständige Einheit gebildet ist. Diese Einheit kann bereits vor erfolgter Endmontage in Betrieb genommen und ausführlich auf ihre Funktionalität getestet werden. Ist die Qualität des Antriebsmoduls 10 sichergestellt, wird es während der Endmontage der Baumaschine am Grundgestell 30 wie oben erläutert befestigt.

Der Rahmen 13 besitzt eine Bodenfläche 14 und eine daran zur L-Form anschließende, innen liegende Seitenfläche 15. Ferner können weitere nicht dargestellte Verstrebungen von oben liegender Kante der Seitenfläche 15 zur Außenkante der Bodenfläche 13 verlaufen, an denen ein oder mehrere Gitter zum Schutz der Komponenten befestigbar sind. Hierdurch ergibt sich eine käfigähnliche Bauform des Rahmens 13. Grundsätzlich ist der Rahmen 13 mehrteilig ausführbar, wobei die einzelnen Rahmenteile zur separaten Aufnahme der einzelne Komponenten des Antriebsmoduls 10 dienen und miteinander zum Modul 10 verbunden werden.

Ferner umfaßt ein weiteres Modul die Fahrerkabine/Führerkabine 20, die ebenfalls während des Produktionsprozesses separat hergestellt und überprüft wird. Die Führerkabine 20, welche bei Bedarf einzelne Steuerkomponenten der Baumaschine sowie ein Bedienfeld 21 aufnimmt, ist auf der Oberseite des Grundgestells 30 durch passende Verbindungsmittel 32 lösbar angekoppelt. Erforderliche Steuerleitungen der Fahrerkabine 20 werden mit den entsprechenden Anschlüssen des Antriebsmoduls 10 bei der Endmontage verbunden.

Die Baumaschine der einzigen Figur weist ein nicht dargestelltes Anbaugerät auf, das über einen hydraulischen Kreislauf versorgt wird. In einer Ausführung als Hydraulikbagger wird die Baggerschaufel über den hydraulischen Kreislauf des Oberwagens betätigt. Die Energieversorgung des Hydraulikkreislaufs erfolgt ebenfalls über das Antriebsmodul 10. Der Verbrennungsmotor 12 des Antriebsmoduls 10 treibt eine entsprechende Hydraulikpumpe an, die entweder im Antriebsmodul 10 oder in einem anderen Modul integriert ist.

Die gesamte Ventilanordnung des hydraulischen Kreislaufs ist vorteilhafterweise in einer eigenen Einheit gesondert montiert und durch das Modul 40 in der Figur dargestellt. Sämtliche regeltechnischen Komponenten des Hydraulikkreislaufs sind in der Einheit 40 integriert und bereits vor der Endmontage miteinander verschlaucht, so daß das Modul 40 nur noch mit dem Hydrauliktank sowie dem Antriebsmodul 10 und dem hydraulischen Anbaugerät verbunden werden muß. Ein komplexer Aufbau der hydraulischen Leitungen bzw. des hydraulischen Kreislaufs während der Endmontage ist damit nicht mehr erforderlich. Die Schaltanordnung der hydraulischen Ventile kann bereits während der Produktion der Einheit 40 ausgiebig getestet werden und auf ihre korrekte Funktionalität überprüft werden.

Als weiteres Modul ist der Versorgungstank 50 in der Figur dargestellt. Dieser beinhaltet bevorzugt den Hydrauliktank zur Versorgung des Hydraulikkreislaufs mit einem Hydraulikmedium. Ferner kann das Modul 50 auch den Kraftstofftank für die Versorgung des Antriebsaggregats 10 beinhalten. Das Modul 50 sowie die Hydraulikventileinheit 40 werden auf der Rückseite des Grundgestells 30 montiert. Sind alle Module am Grundgestell 30 montiert, wird die Verkleidung 60 am Grundgestell 30 fixiert.

## Patentansprüche

1. Vorrichtung, insbesondere als Mobilbagger ausgeführte Baumaschine oder Umschlaggerät, mit einem ein Fahrgestell (30) tragenden Unterwagen und einem damit verbundenen Oberwagen, wobei der Oberwagen modulartig aus mindestens drei Modulen aufgebaut ist, die miteinander lösbar koppelbar sind und wobei wenigstens ein Antriebsmodul (10) vorgesehen ist, das eine funktionsfähige Einheit aus Maschinenantrieb sowie Maschinenkühlsystem bildet und mindestens ein weiteres Modul (20) ein oder mehrere Oberwagenkomponenten umfaßt, wobei ein weiteres Modul das Hauptgestell des Oberwagens bildet, an dem alle weiteren Module mittelbar oder unmittelbar lösbar ankoppelbar sind, **dadurch gekennzeichnet, dass**
die Vorrichtung ein Hydrauliksystem umfaßt, wobei alle für den Regelungsprozess innerhalb des Hydrauliksystems zuständigen Hydraulikventile in einem separaten Modul (40) zusammengefaßt sind, und dass ein Modul (50) einen Hydrauliktank und/oder Kraftstofftank umfaßt.

2. Vorrichtung nach Anspruch 1, **dadurch gekennzeichnet, daß** das Antriebsmodul wenigstens einen Verbrennungsmotor und/oder ein Antriebsaggregat für eine Hydraulikvorrichtung umfaßt.

3. Vorrichtung nach Anspruch 1 oder 2, **dadurch gekennzeichnet, daß** das Antriebsmodul wenigstens einen Rahmen oder ein Gestell zur Aufnahme der Antriebskomponenten umfaßt.

4. Vorrichtung nach einem der vorangegangenen Ansprüche, **dadurch gekennzeichnet, daß** wenigstens ein Modul eine Steuereinheit, insbesondere eine Hydrauliksteuerung umfaßt.

5. Vorrichtung nach einem der vorangegangenen Ansprüche, **dadurch gekennzeichnet, daß** ein Modul die Maschinenkabine umfaßt.

6. Vorrichtung nach einem der vorangegangenen Ansprüche, **dadurch gekennzeichnet, daß** die Module Anschlußmittel zur Herstellung wenigstens einer Versorgungsleitung aufweisen.

## Claims

1. An apparatus, in particular a construction machine configured as a mobile excavator or a transfer apparatus, having an undercarriage carrying a chassis (30) and having a superstructure connected thereto, wherein the superstructure is made up in a modular manner of at least three modules which can be releasably coupled to one another, and wherein at least one drive module (10) is provided which forms an operable unit of a machine drive and a machine cooling system and at least one further module (20) includes one or more superstructure components,
wherein a further module forms the main frame of the superstructure to which all further modules can be releasably indirectly or directly coupled, **characterized in that**
the apparatus comprises a hydraulic system, with all the hydraulic valves responsible for the regulation process within the hydraulic system being combined in a separate module (40);
and **in that** a module (50) includes a hydraulic tank and/or fuel tank.

2. An apparatus in accordance with claim 1, **characterized in that** the drive module includes at least one internal combustion engine and/or a drive unit for a hydraulic apparatus.

3. An apparatus in accordance with either of claims 1 or 2, **characterized in that** the drive module includes at least one frame or one rack for receiving the drive components.

4. An apparatus in accordance with one of the preceding claims, **characterized in that** at least one module includes a control unit, in particular a hydraulic control.

5. An apparatus in accordance with one of the preceding claims, **characterized in that** a module includes the machine cabin.

6. An apparatus in accordance with one of the preceding claims, **characterized in that** the modules have connection means for establishing at least one supply line.

## Revendications

1. Dispositif, en particulier engin ou appareil de transbordement réalisé sous la forme d'une pelle sur pneus, comprenant un châssis inférieur portant un mécanisme de déplacement (30) et un châssis supérieur relié au châssis inférieur, dans lequel le châssis supérieur est construit de manière modulaire à partir d'au moins trois modules, qui peuvent être couplés les uns aux autres de manière détachable, et dans lequel au moins un module d'entraînement (10) est prévu, lequel forme une unité fonctionnelle constituée d'un entraînement d'engin ainsi que d'un système de refroidissement d'engin, et au moins un autre module (20) comprend un ou plusieurs composants de châssis supérieur, un autre module formant l'ossature principale du châssis supérieur, à laquelle tous les autres modules peuvent être directement ou indirectement couplés de manière détachable,
**caractérisé en ce que**
le dispositif comprend un système hydraulique, toutes les soupapes hydrauliques pilotant le processus de régulation au sein du système hydraulique étant réunies dans un module séparé (40) et **en ce qu'**un module (50) comprend un réservoir hydraulique et/ou un réservoir de carburant.

2. Dispositif selon la revendication 1, **caractérisé en ce que** le module d'entraînement comprend au moins un moteur à combustion interne et/ou un ensemble moteur pour un dispositif hydraulique.

3. Dispositif selon la revendication 1 ou 2, **caractérisé en ce que** le module d'entraînement comprend au moins un cadre ou une ossature pour recevoir les composants d'entraînement.

4. Dispositif selon l'une des revendications précédentes, **caractérisé en ce qu'**au moins un module comprend une unité de commande, en particulier une commande hydraulique.

5. Dispositif selon l'une des revendications précédentes, **caractérisé en ce qu'**un module comprend la cabine de l'engin.

6. Dispositif selon l'une des revendications précédentes, **caractérisé en ce que** les modules comportent des moyens de raccordement pour réaliser au moins une ligne d'alimentation.
